# EUROPEAN PATENT APPLICATION

(11) **EP 1 732 328 A1**
(43) Date of publication of application: **13.12.2006**
(21) Application number: 05012134.2
(22) Date of filing: 06.06.2005
(51) Int. Cl.: H04N 7/24, G11B 27/034, G06F 17/00

(54) **Method for automatically removing metadata information from audio data files**

(71) Applicant: DEUTSCHE THOMSON-BRANDT GMBH, 78048 Villingen-Schwenningen (DE)
(72) Inventor: Aust, Andreas, 30177 - Hannover (DE)
(74) Representative: Rittner, Karsten

(57) **Abstract**

ID3v2-tags of MP3 files can contain much more data than ID3 tags of previous versions. This information can comprise data that small mobile devices cannot or need not make use of, e.g. high-resolution picture data. During transfer of an MP3 file from a PC to a mobile device, the devices may negotiate which data within ID3v2-tags is not required by the mobile device. Alternatively, the user can generally configure which ID3 data tags to skip. The ID3v2-tag information is scanned and the unnecessary information is either not transferred to or not stored on the mobile device, depending on whether the transmitting or the receiving device skips this information. The advantage is that storage space on the mobile device is saved. Additionally, transmission time can be reduced.

## Description

### Field of the invention

This invention relates to a method for automatically removing metadata information from audio data files, such as mp3 files.

### Background

Music data files are often encoded with MPEG-Layer3 (mp3) and contain tags with additional information, so-called ID3-tags. An advantage of mp3 audio coding is the reduction of the bitrate and thus the file size.
With the introduction of the ID3-tag version 2.0 (ID3v2), the additional (meta-) information within an mp3 file can be as large as 256MB, compared to 128 bytes in the previous ID3-tag version 1.

Today, small-sized and light-weighted mobile audio players are available that allow the storage of many music titles. These files are usually transferred from other devices, e.g. personal computers (PCs), to the mobile player. These mobile players usually have a limited user interface and limited amount of memory. The amount of meta information data can be significant, and thus reduce the amount of memory that remains available for the actual music data.

Available software tools allow users to manually edit ID3 tags in general, e.g. to add notes. However, these tools rely on manual selection of data elements.

### Summary of the Invention

When transferring music files e.g. from a PC to a mobile audio player, it is often unnecessary to store all the attached ID3v2 information on the mobile device, since the mobile player cannot use a part of this information anyway. E.g. a picture of the album cover cannot be displayed to the user when the mobile player has only a simple alpha-numerical display.

The present invention describes a mechanism that allows specifying which information within an ID3-tag needs to be kept when transferring a music file with attached meta information from a storage or archive device to a resource limited device, such as a mobile audio player.

According to the invention, the transmitting or the receiving device detects according to a description of the capabilities of the receiving device (i.e. the mobile player) with respect to the additional meta information which parts of the music data cannot be handled by the receiving device. Then, the transmitting or the receiving device removes these parts of the additional metadata information from the music data to be transmitted and stored (in case of the transmitting device) or just stored (in case of the receiving device), and the music data with the remaining additional meta information are transferred and/or stored.

This removing can be done e.g. by determining the unused parts, and then deleting or skipping the determined parts during a copy operation, during transmission or during storage.

According to one embodiment of the invention, the transmitting device transmits the requested music data conventionally with all its attached meta information, and the receiving device detects which of the meta information items it cannot handle, and removes these items before storing the remaining data.

According to another embodiment of the invention, the transmitting device receives a message indicating which type(s) of meta information need not be transmitted, or which type(s) of meta information should be transmitted. In this case, the transmitting device detects which parts of the meta information need not be transmitted and e.g. skips transmission of these parts but transmits the rest. This can be done e.g. by copying the requested mp3 file to a transmit buffer, removing the unused data from the copy and transmitting the remaining data. The transmitting device will however not modify its original data, i.e. when the transmitting device is e.g. a PC that has a requested mp3 file stored on its harddisk, it will not change this file. The unused data are only removed from the transmission copy or they are skipped during transmission instead of being physically deleted.

In one embodiment of the invention, the mentioned message indicating which type(s) of meta information need not be transmitted comes from the user. E.g. a software program on the PC can be configured generally by the user to strip off unnecessary or unwanted metadata from the ID3-tag.

In another embodiment, the mentioned message comes from the receiving device. E.g. the transmitting device can negotiate with the connected mobile device, wherein the mobile device sends a list indicating its capabilities, or indicating the additional meta information to be skipped or to be transmitted.

In a more sophisticated environment, a central control device may be connected to both the providing and the receiving device, and provide the above-mentioned message. Such central controller may also handle other communication and the data transmission between the devices.

Further, the connection between transmitting and receiving device may be a limiting factor. In this case the invention is particularly advantageous because transmission time is saved. E.g. when music files are streamed over a bandlimited network, it may be advantageous not to transmit some larger ID3v2 information, although the receiving device might be able to use it. For this purpose, the some or all of the ID3v2 information tags may have an indication of their relevance. E.g. if the mobile player has a small display that would in principle be capable of displaying a frame cover picture, the user may have configured the transmitting PC to download the music data as fast as possible to the mobile player. As a reaction on this configuration, the PC skips the transmission of correspondingly marked ID3-tag items, e.g. pictures.

Further advantageous embodiments of the invention are disclosed in the dependent claims, the following description and the figures.

### Brief description of the drawings

Exemplary embodiments of the invention are described with reference to the accompanying drawings, which show in
Fig.1 a conventional ID3v2-tag;
Fig.2 a reduced ID3v2-tag;
Fig.3 the structure of a communication between providing and receiving device; and
Fig.4 exemplary processing in a providing device.

### Detailed description of the invention

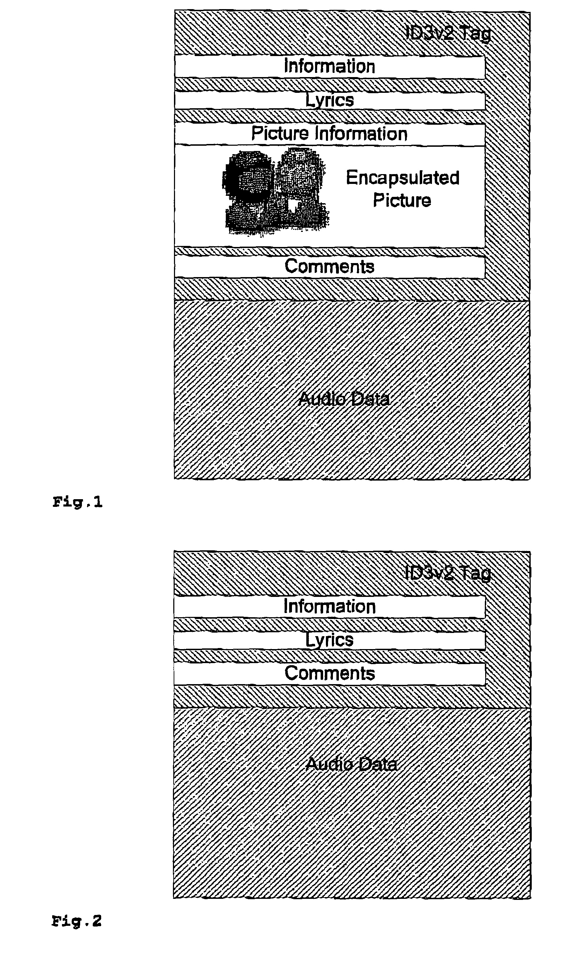

Figs.1 and 2 show the structure of an mp3 file containing ID3v2 data. In Fig.1, the mp3 file has additionally to the audio data a conventional ID3v2 tag containing general information, lyrics, picture information and user or author comments. In Fig.2, the unnecessary metadata have been removed according to the invention. In this example, it is the encapsulated picture that has been removed, since the e.g. mobile device has detected that it cannot display the information. It is however possible that other information attached within the ID3-tag is removed, e.g. additional audio, video or text information, commercial information, link information referring e.g. to the PC, and similar types of data that needs not be available on the mobile device.

A first device containing a storage, e.g. a PC with a harddisk or a bigger audio player with a flash memory, has stored on its storage a number of audio files with a structure as shown in Fig.1. In one embodiment, the device receives a request from another device, which is e.g. a small mobile audio player with only alpha-numeric display, or with no display at all, as described e.g. in the European patent application EP1435620. This request contains e.g. a list of ID3v2 tags that should be included, or a list of ID3v2 tags that should not be included, or an indication specifying the type or the available user interface of the requesting device. E.g., this indication indicates that the requesting device is the model X_MOD of the manufacturer Y_MAN.

The first device looks-up in the Internet, or in an internal table that may be preprogrammed or locally stored and maintained automatically via the Internet, that the requesting device has e.g. a single-line alpha-numerical display. In response to this information, the first device determines which metadata may be removed from the audio files before transmission. In this case it may be e.g. the encapsulated picture data, the lyrics data and the written comments, since these data cannot be displayed on a single-line alpha-numerical display in a meaningful way. The music track(s) to be transmitted can be requested in a separate or in the same request. Then the first device copies the requested music file from its harddisk to an intermediate storage, e.g. memory, and removes the determined useless metadata from the copy before or during transmission. The remaining data of the copy are shown in Fig.2. Then the first device transmits these remaining data of the copy.

Exemplarily, a user wants to download some mp3 files from a PC to a mobile USB stick audio player. The collection of the user's mp3 file library is well maintained and all files contain detailed meta information, including high resolution album pictures and other additional meta info. With the limited user interface of such small mobile devices it is not possible to view the album picture. Further, it is not feasible to access and browse any other meta information than the conventional information types of interpret, title and album name. Since additional meta information tags cannot be accessed in a meaningful way on a small device while consuming precious memory on the device, it is unnecessary to transfer and/or store them. There are different scenarios for an implementation of this method.

In one embodiment, the user selects which kind of meta information should be transferred to the mobile player, or which should be stripped off, and stores this information in a configuration file on the device that may be requested to transmit music data, e.g. a PC. The configuration file may refer e.g. only to the USB port. Upon said request, the device evaluates the configuration file.

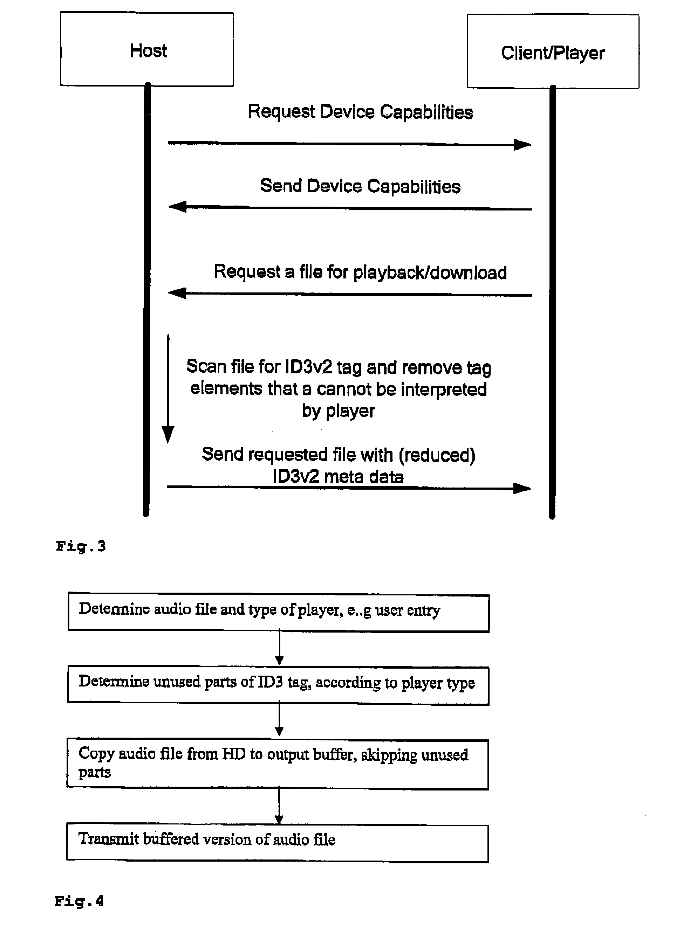

In one embodiment, the PC reads e.g. via the connection to be used for the transmission a list of some or all device capabilities from the mobile device and decides which meta information should be transferred and left out. This scenario is shown in Fig 3.

In another embodiment, the transmitting device determines the capabilities according to the name and/or type of the mobile device. This can be done e.g. with a stored look-up table, with a connection to an Internet page that lists different devices and their respective capabilities, or according to a standardized type indication received from the mobile device. The name or type of the mobile device can be obtained automatically by communication between the devices or manually by user input.

In another embodiment, the receiving device scans the ID3 tag data during the transfer or immediately after the transfer, and removes the unnecessary sections. This requires no information to be sent from the receiving to the transmitting device; the transmission itself may be done conventionally, and may also be initiated manually by the user.

According to the invention, an apparatus for transferring audio data files with attached additional meta information comprises
means for determining one or more audio data files to be transmitted, e.g. the files may be selected by a user using the browser of a PC that has the audio data files stored on its harddisk,
means for receiving and evaluating a description of device capabilities of another device with respect to additional meta information of audio data files, e.g. a Bluetooth or USB interface for receiving a message from a mobile mp3 player indicating the mobile players display type,
means for automatically detecting, based on said description, parts of the additional meta information of audio data files that cannot be handled by the other device, such as a JPEG formatted picture file, and
means for transmitting the determined one or more audio data files, wherein the detected parts of the additional meta information from the determined one or more audio data files are not transmitted.

In particular, the description of device capabilities of the other device may contain a device type indication, e.g. more general ("Mobile mp3 player") or more specific ("Thomson Lyra PDP5000"), and for the automatic detection of parts of the additional meta information is based on said type indication, e.g. using an internal look-up table or a previously stored description file that was edited by the user.

Further according to the invention, an apparatus for receiving audio data files with attached additional meta information comprises
means for receiving an audio data file with attached additional meta information, e.g. interface,
means for accessing and evaluating a description of its own capabilities with respect to additional meta information of audio data files, usually any microprocessor,
means for automatically detecting parts of the additional meta information of the received audio data file, the detected parts being parts that cannot be utilized according to said description evaluation,
means for removing from the received audio data file the detected parts of the additional meta information, and
means for storing or reproducing the received audio data file after or during removal of the detected parts of the additional meta information.

The various data items within ID3v2-tags are called frames and can automatically be distinguished e.g. according to information in their header. The frames consists of one frame header followed by one or more fields containing the actual information. The header and frames field describes the tags contents, as specified e.g, on http://id3lib.sourceforge.net/id3/id3v2.4.0-structure.txt

E.g. a picture frame contains a MIME formatted picture directly related to the audio file, and a short description of the picture, represented as a text string. There may be several pictures in individual frames attached to one file, but only one with the same content descriptor. There may only be one picture with the picture type declared as picture type 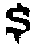 01 and 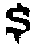 02 respectively. It is possible to put only a link to the image file by using the 'MIME type' "-->" and having a complete URL instead of picture data. The header for attached pictures has the following format:

### <Header for 'Attached picture', ID: "APIC">

Text encoding 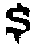 xx
MIME type <text string> 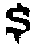 00
Picture type 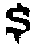 xx
Description <text string according to encoding> 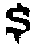 00 (00)
Picture data <binary data>

Picture type: 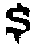 00 Other

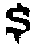 01 32x32 pixels 'file icon' (PNG only)
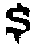 02 Other file icon
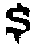 03 Cover (front)
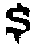 04 Cover (back)
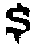 05 Leaflet page
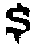 06 Media (e.g. label side of CD)
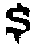 07 Lead artist/lead performer/soloist
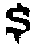 08 Artist/performer
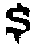 09 Conductor
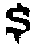 0A Band/Orchestra
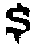 0B Composer
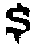 0C Lyricist/text writer
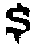 0D Recording Location
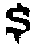 0E During recording
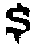 0F During performance
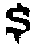 10 Movie/video screen capture
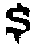 11 A bright coloured fish
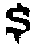 12 Illustration
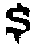 13 Band/artist logotype
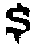 14 Publisher/Studio logotype

In another type of frame, general encapsulated objects (GEOB), any type of file can be encapsulated. After the header, 'Frame size' and 'Encoding' follows 'MIME type' represented as a terminated string encoded with ISO 8859-1. Then follows a string with a content description and the actual object. There may be more than one "GEOB" frame in each tag, but only one with the same content descriptor.

### <Header for 'General encapsulated object', ID: "GEOB">

Text encoding 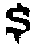 xx
MIME type <text string> 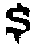 00
Filename <text string acc. to encoding>
Content description <text string acc. to encoding>
Encapsulated object <binary data>

The invention can advantageously also be used for transferring encoded audio data to small devices, including headsets, that contain a decoder, but no display at all, and thus cannot make use of any additional data such as picture data, studio logo, lyrics, recording details or names of artist, text writer etc.

The present invention describes a method to save memory and/or bandwidth in resource limited environments when streaming or playing back mp3 files, by automatically stripping off metadata during data transfer. Which metadata should be stripped off can either be specified by the user or by the receiving device during an initial negotiation between the sender and the receiver. During the decision process, the sender can also evaluate the connection status and adopt the amount of data accordingly. E.g. if the connection is done over a very busy connection, the amount of data can be minimized by removing more ID3v2-tag information than usual. This allows saving precious resources, e.g. bandwidth in wireless networks or memory in mobile or highly embedded devices. Thus, these resources can be used more efficiently for the actual music data.

Advantageously, the present invention allows automatic removal of ID3v2-tag information according to user configuration or device capabilities, before or during transfer of mp3 files from e.g. a PC to a mobile player that has limited memory and/or user interface capabilities.

## Claims

1. A method for transferring an audio data file with attached additional meta information (ID3v2) from a first device to a second device, comprising the steps of
- determining in the first device one or more audio data files to be transmitted to the second device;
- receiving and evaluating a description of the capabilities of the second device with respect to additional meta information of audio data files;
- based on the description of the second devices capabilities with respect to additional meta information, automatically detecting parts of the additional meta information of audio data files that cannot be handled by the second device; and
- transmitting the determined one or more audio data files from the first to the second device, wherein the detected parts of the additional meta information from the determined one or more audio data files are not transmitted from the first device or not accepted by the second device.

2. Method according to claim 1, wherein the step of receiving and evaluating the description of the capabilities of the second device with respect to additional meta information of audio data files and the step of automatically detecting parts of the additional meta information of audio data files that cannot be handled by the second device are performed by the first device, and wherein transmission of the detected parts of the additional meta information of the determined one or more audio data files from the first device is suppressed.

3. Method according to the preceding claim, wherein the description of the second devices capabilities with respect to additional meta information contains a type indication of the second device, and the first device detects automatically from the type of the second device parts of the additional meta information of audio data files that cannot be handled by the second device.

4. Method according to any of the preceding claims, wherein the description of the second devices capabilities with respect to additional meta information contains an indication of the display type available on the second device.

5. Method according to any of the preceding claims, wherein the first device generates a copy of the determined one or more audio data files in a buffer, removes the automatically detected parts of the additional meta information from the copy and transmits the remaining buffered data.

6. Method according to claim 1, wherein the step of receiving and evaluating the description of the second devices capabilities with respect to additional meta information of audio data files and the step of automatically detecting parts of the additional meta information of audio data files that cannot be handled by the second device are performed by the second device, and wherein the detected parts of the additional meta information from the determined one or more audio data files are not accepted in the second device.

7. Method for receiving audio data files with attached additional meta information (ID3v2) in a receiving device, the method comprising the steps of
- receiving an audio data file with attached additional meta information;
- evaluating a description of the receiving devices capabilities with respect to additional meta information of audio data files;
- automatically detecting parts of the additional meta information of the received audio data file, the detected parts being parts that cannot be utilized according to said description evaluation;
- removing from the received audio data file the detected parts of the additional meta information; and
- storing or reproducing the received audio data file after or during removal of the detected parts of the additional meta information.

8. Apparatus for transferring audio data files with attached additional meta information (ID3v2), the apparatus comprising
- means for determining one or more audio data files to be transmitted;
- means for receiving and evaluating a description of device capabilities of another device with respect to additional meta information of audio data files;
- means for automatically detecting, based on said description, parts of the additional meta information of audio data files that cannot be handled by the other device; and
- means for transmitting the determined one or more audio data files, wherein the detected parts of the additional meta information from the determined one or more audio data files are not transmitted.

9. Apparatus according to the preceding claim, wherein the description of device capabilities of another device contains a device type indication, and wherein the automatic detection of parts of the additional meta information is based on said type indication.

10. Apparatus for receiving audio data files with attached additional meta information (ID3v2), the apparatus comprising
- means for receiving an audio data file with attached additional meta information;
- means for evaluating a description of its own capabilities with respect to additional meta information of audio data files;
- means for automatically detecting parts of the additional meta information of the received audio data file, the detected parts being parts that cannot be utilized according to said description evaluation;
- means for removing from the received audio data file the detected parts of the additional meta information; and
- means for storing or reproducing the received audio data file after or during removal of the detected parts of the additional meta information.
